# EUROPÄISCHE PATENTSCHRIFT

(11) **EP 1 478 143 B1**
(45) Veröffentlichungstag und Bekanntmachung des Hinweises auf die Patenterteilung: **05.10.2005**
(21) Anmeldenummer: 03405660.6
(22) Anmeldetag: 09.09.2003
(51) Int. Cl.: H04L 12/58, H04L 29/06, G06F 1/00

(54) **Verfahren und Vorrichtung zur gesicherten Übermittlung von elektronischen Nachrichten**
Method and device for secure e-mail transmission
Procédé et dispositif de transmission sécurisée de courrier électronique

(30) Priorität: 07.08.2003 EP 03405583
(43) Veröffentlichungstag der Anmeldung: 17.11.2004
(73) Patentinhaber: Onaras AG, 5408 Ennetbaden (CH)
(72) Erfinder: Honegger, Fabian, 5400 Baden (CH)
(74) Vertreter: Vogel, Dany

(56) Entgegenhaltungen:
- EP-A- 0 869 652
- WO-A-00/31931
- SPIEGEL G: "HINTER SCHLOSS UND SIEGEL" CT MAGAZIN FUER COMPUTER TECHNIK, VERLAG HEINZ HEISE GMBH., HANNOVER, DE, Nr. 8, 12. April 1999 (1999-04-12), Seiten 174-179, XP000804892 ISSN: 0724-8679

## Beschreibung

### Technisches Gebiet

Die vorliegende Erfindung betrifft ein Verfahren zur gesicherten Übermittlung von elektronischen Nachrichten über ein Telekommunikationsnetz und dafür geeignete Vorrichtungen. Die Erfindung betrifft insbesondere ein Verfahren und geeignete Vorrichtungen für die gesicherte Übermittlung von elektronischen Nachrichten, wie so genannte Electronic-Mails (E-Mail), über ein Telekommunikationsnetz, wobei die elektronischen Nachrichten verschlüsselt und entschlüsselt werden.

### Stand der Technik

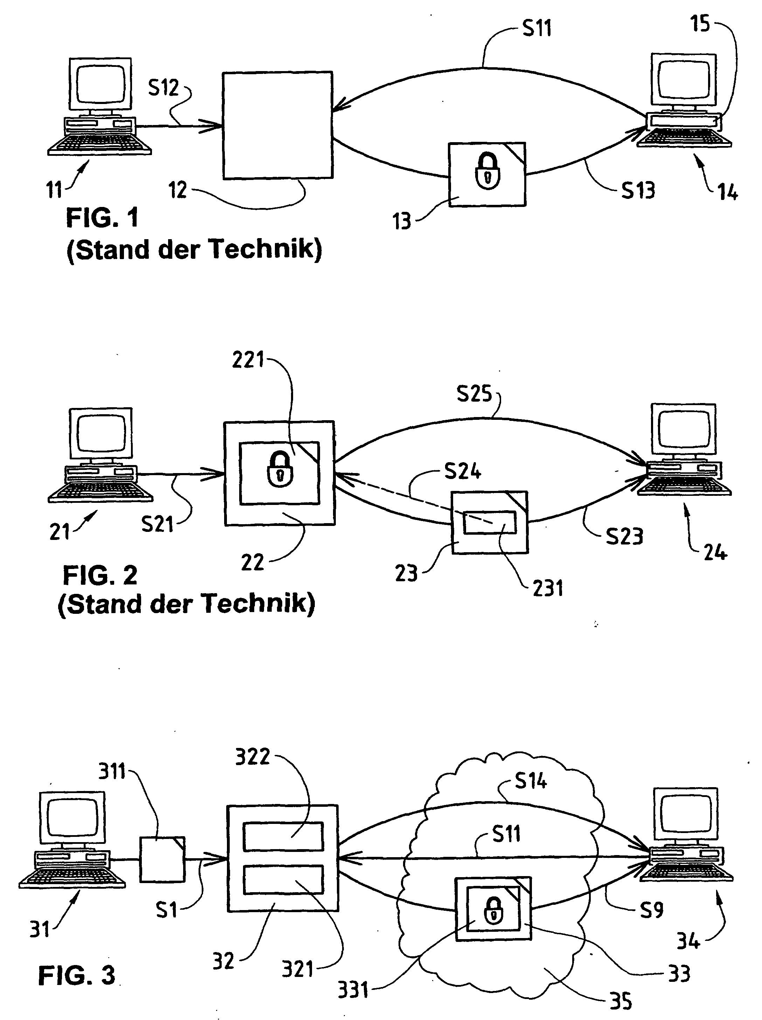

Um den Verkehr von elektronischen Nachrichten wie E-Mail zu sichern, werden Verfahren zur Inhaltsverschlüsselung der E-Mails eingesetzt. Zurzeit werden hauptsächlich zwei Arten von Verfahren für den Austausch von verschlüsselten elektronischen Nachrichten mit externen Partnern eingesetzt, das so genannte Public-Key-Verfahren (siehe Figur 1) und ein Verfahren, das auf so genannten Kurierdienst-Systemen (siehe Figur 2) basiert.

Beim Public-Key-Verfahren wird das E-Mail beim Sender mit einem öffentlichen Schlüssel (Public Key) des Empfängers verschlüsselt und beim Empfänger mit dessen privatem Schlüssel (Secret Key) wieder entschlüsselt. Wie in der Figur 1 illustriert wird, kann das Public-Key-Verfahren bei Firmen über einen zentralen E-Mail-Verschlüsselungs-Gateway 12 ausgeführt werden, so dass die einzelnen Mitarbeiter nichts mit dem Schlüsselmanagement und der Verschlüsselung zu tun haben. Wie aus der Figur 1 ersichtlich ist, schickt der externe Partner 14 im Public-Key-Verfahren im Schritt S11 seinen öffentlichen Schlüssel an einen internen Mitarbeiter 11, beziehungsweise an den E-Mail-Verschlüsselungs-Gateway 12, wo er entweder manuell oder automatisch in eine Schlüsseldatenbank gespeichert wird. Wenn im Schritt S12 ein E-Mail vom internen Mitarbeiter 11 an den externen Partner 14 geschickt wird, wird das E-Mail vom E-Mail-Verschlüsselungs-Gateway 12 automatisch mit dem eingefügten öffentlichen Schlüssel des externen Partners 14 verschlüsselt. Die Verschlüsselung kann zudem an die Bedingung geknüpft sein, dass das E-Mail definierte Kriterien erfüllen muss. Im Schritt S13 wird das verschlüsselte E-Mail vom E-Mail-Verschlüsselungs-Gateway 12 an den externen Partner 14 übermittelt. Der externe Partner 14 empfängt das verschlüsselte E-Mail und entschlüsselt es mittels des Entschlüsselungsmoduls 15 unter Verwendung des nur ihm bekannten privaten Schlüssels und macht das E-Mail wieder lesbar. Das Entschlüsselungsmodul 15 ist als Software- oder Hardware-Lösung ausgeführt.

Die bekanntesten zwei Public-Key-Verfahren sind OpenPGP (Pretty Good Privacy) und S/MIME (Secure Multipurpose Internet Mail Extensions), für die es eine Reihe von Lösungen und Plugins gibt.

Ein wesentlicher Nachteil der Public-Key-Verfahren besteht darin, dass der Empfänger spezielle Zusatzmodule, typischerweise Softwareprogramme, Softwareteilprogramme sowie kryptographische Schlüssel und/oder Zertifikate, bei seinem Endgerät installieren muss und diese Zusatzmodule richtig bedienen respektive verwenden muss. Dies ist einerseits mit Aufwand verbunden, andererseits werden so gewisse technische Fähigkeiten und Kenntnisse des empfangenden Kommunikationspartners vorausgesetzt, die er nicht unbedingt aufweist. Viele Kommunikationspartner haben zudem nicht einmal die Berechtigung, um auf ihrem System solche Zusatzmodule zu installieren.

Kurierdienst-Systeme oder Kurierdienste werden entweder als Teilsysteme von E-Mail-Verschlüsselungs-Gateways oder als Einzellösungen oder als Dienste (Services) über das Internet angeboten. Wie in der Figur 2 schematisch dargestellt wird, schickt der Sender 21 bei solchen Lösungen im Schritt S21 das E-Mail unverschlüsselt an das Kurierdienst-System 22. Dieses Versenden des E-Mails kann mit einem normalen Mailprogramm oder über ein integriertes Webmail-System geschehen. Auf dem Kurierdienst-System 22 wird das empfangene E-Mail 221 entweder unverschlüsselt oder mit einem geheimen Schlüssel verschlüsselt abgespeichert und zwischengelagert. Wie in der Figur 2 ersichtlich ist, wird vom Kurierdienst-System 22 ein neues zweites E-Mail 23 bereitgestellt, typischerweise im HTML-Format, und im Schritt S23 an den Empfänger 24 übermittelt. Das neue zweite E-Mail 23 umfasst einen so genannten Hyper-Link 231 zum Kurierdienst-System 22. Wenn der Empfänger 24 in seinem Mailprogramm auf diesen Hyper-Link 231 klickt, öffnet sich im Schritt S24 ein Webbrowser-Fenster, zum Beispiel innerhalb des Mailprogramms, und es erscheint eine Webseite, wo der Empfänger 24 ein Passwort eintippen muss, das er vorher auf anderem Weg, zum Beispiel per Telefon, erhalten hat. Nach dem Eintippen des Passwortes wird dem Empfänger 24 vom Kurierdienst-System 22 im Schritt S25 das E-Mail, das im Kurierdienst-System 22 zwischengespeichert ist, im Webbrowser oder je nach Dateityp in einem dafür vorgesehenen Darstellungsprogramm dargestellt. Die Verbindung vom Browser des Empfängers 24 zum Kurierdienst-System 22 wird per SSL (Secure Socket Layer) gesichert, respektive verschlüsselt, so dass niemand dazwischen die E-Mail-Nachricht abfangen und lesen kann.

Ein solches Kurierdienst-System wird in der Druckschrift EP-869 652-A beschrieben.

Die Kurierdienst-Systeme weisen nicht den Nachteil der Public-Key-Verfahren auf, weil der Kommunikations-Partner kein Programm oder Zertifikat installieren muss. Der Kommunikations-Partner kann einfach per Hyper-Link eine Verbindung zu einem Webserver erstellen, wozu die meisten E-Mail-Programme heutzutage eingerichtet sind.

Bei den Kurierdienst-Systemen ergeben sich allerdings Nachteile bei der Mail-Verwaltung. Die Kurierdienst-Systeme benutzen das Web-Protokoll HTTP(S) (Hypertext Transfer Protocol (Secure)) und nicht Mail-Protokolle, das heisst, das E-Mail wird (gesichert) auf einen Web-Server hochgeladen, dort gespeichert und wieder heruntergeladen. Nur der Hyper-Link für den Zugriff auf diese Webseite wird per E-Mail versendet. Das E-Mail wird also bei den Kurierdienst-Systemen nicht beim Empfänger 24 sondern im Kurierdienst-System 22 gespeichert, beispielsweise auf einem Webserver des Kurierdienst-Systems 22. Der Empfänger 24 kann das E-Mail folglich nicht bei sich im Mail-Programm verwalten, verschieben, kopieren, löschen, auf Backup sichern usw. Der Empfänger 24 muss das E-Mail entweder auf dem Webserver des Kurierdienst-Systems 22 verwalten oder er muss es herunterladen und bei sich lokal auf der Harddisk speichern. Die Betreiber des Kurierdienst-Systems, typischerweise die Firma des Senders, sehen sich deshalb konfrontiert mit der Speicherung sämtlicher E-Mails an die Kommunikationspartner. Dadurch sind die Betreiber zu einer immens grossen Infrastruktur gezwungen und/oder sie müssen die E-Mails nach einer gewissen Zeit wieder löschen. Das Löschen eines zwischengespeicherten E-Mails bedeutet, dass der Kommunikationspartner dieses E-Mail nie mehr lesen kann, auch wenn sich das E-Mail mit dem Hyper-Link noch in seiner Inbox befindet.

### Darstellung der Erfindung

Es ist eine Aufgabe der vorliegenden Erfindung, ein neues Verfahren zur gesicherten Übermittlung von elektronischen Nachrichten über ein Telekommunikationsnetz und dafür geeignete Vorrichtungen vorzuschlagen, welche nicht die Nachteile des Stands der Technik aufweisen.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Die oben genannten Ziele werden durch die vorliegende Erfindung insbesondere dadurch erreicht, dass eine erste elektronische Nachricht, beispielsweise eine E-Mail, die gesichert über ein Telekommunikationsnetz übermittelt werden soll, beispielsweise über das Internet, in einem Verschlüsselungssystem verschlüsselt wird, und dass im Verschlüsselungssystem eine zweite elektronische Nachricht bereitgestellt wird, wobei die zweite elektronische Nachricht einen Inhalt im Format einer Textauszeichnungssprache umfasst. Dabei wird die verschlüsselte erste elektronische Nachricht in den Inhalt der zweiten elektronischen Nachricht eingefügt, beispielsweise versteckt in Formularfelder der Textauszeichnungssprache. Die Textauszeichnungssprache, eine so genannte Markup-Language, ist beispielsweise HTML (Hypertext Markup Language) oder XML (Extensible Markup Language). Die bereitgestellte zweite elektronische Nachricht wird über das Telekommunikationsnetz an die Empfangsvorrichtung übermittelt, an die die erste elektronische Nachricht adressiert ist, beispielsweise an ein Kommunikationsendgerät oder an einen Personal Computer. Die verschlüsselte erste elektronische Nachricht wird von der Empfangsvorrichtung über das Telekommunikationsnetz an das Verschlüsselungssystem übermittelt. Die über das Telekommunikationsnetz empfangene erste elektronische Nachricht wird im Verschlüsselungssystem entschlüsselt und vom Verschlüsselungssystem über eine gesicherte Verbindung, beispielsweise über eine SSL-Verbindung, zur Darstellung an die Empfangsvorrichtung übermittelt. In vorteilhafter Weise wird durch die Übermittlung der verschlüsselten ersten elektronischen Nachricht verpackt in einer zweiten elektronischen Nachricht und die automatische Rückmeldung der verschlüsselten ersten elektronischen Nachricht an das Verschlüsselungssystem eine gesicherte Übermittlung der ersten elektronischen Nachrichten über ein Telekommunikationsnetz ermöglicht, ohne dass die Empfangsvorrichtung mit zusätzlichen speziellen Modulen für die Entschlüsselung ausgerüstet werden muss und ohne dass der Benutzer der Empfangsvorrichtung sich um Aspekte der Entschlüsselung zu kümmern braucht. Überdies ermöglicht die Übermittlung der verschlüsselten ersten elektronischen Nachricht verpackt in einer zweiten elektronischen Nachricht an die Empfangsvorrichtung dem Empfänger, die zweite elektronische Nachricht mit der darin enthaltenen verschlüsselten ersten elektronischen Nachricht in der Empfangsvorrichtung zu verwalten, das heisst, die erste elektronische Nachricht muss nicht im Verschlüsselungssystem gespeichert, verwaltet und nach einer gewissen Zeit gelöscht werden.

Vorzugsweise wird in den Inhalt der zweiten elektronischen Nachricht ein durch Benutzer betätigbares Aktivierungselement eingefügt, beispielsweise ein so genannter Button (Knopf) oder ein Icon, und der Inhalt der zweiten elektronischen Nachricht wird so gestaltet, dass die verschlüsselte erste elektronische Nachricht von der Empfangsvorrichtung als Antwort auf eine Betätigung des Aktivierungselements in der gesicherten Verbindung über das Telekommunikationsnetz an das Verschlüsselungssystem übermittelt wird. Die Einbettung des durch den Benutzer betätigbaren Aktivierungselements in die zweite elektronische Nachricht ermöglicht eine höchst einfache Kontrolle durch den Benutzer über die Aktivierung der gewünschten Entschlüsselung der verschlüsselten ersten elektronischen Nachricht.

Vorzugsweise wird der Inhalt der zweiten elektronischen Nachricht als Rückmeldeformular mit Formularfeldern eingerichtet und die verschlüsselte erste elektronische Nachricht wird versteckt in Formularfelder des Rückmeldeformulars eingefügt, beispielsweise eine als Feedback-Formular eingerichtete HTML-Seite. Gegebenenfalls vorhandene Anhänge der ersten elektronischen Nachricht werden dabei jeweils verschlüsselt in separate Formularfelder eingefügt. Die Übermittlung der verschlüsselten ersten elektronischen Nachricht an das Verschlüsselungssystem erfolgt dann durch die Übermittlung der Inhalte der Formularfelder von der Empfangsvorrichtung an das Verschlüsselungssystem. Zudem werden beim Bereitstellen der zweiten elektronischen Nachricht in Form eines Rückmeldeformulars Adressinformationen des Verschlüsselungssystems in den Inhalt der zweiten elektronischen Nachricht eingefügt. Die Übermittlung der verschlüsselten ersten elektronischen Nachricht versteckt in Formularfeldern eines Rückmeldeformulars ermöglicht einen äusserst einfachen Austausch der elektronischen Nachrichten zwischen dem Verschlüsselungssystem und der Empfangsvorrichtung, der durch herkömmliche Mail-Programme in der Empfangsvorrichtung ausführbar ist, so dass die Empfangsvorrichtung nicht mit zusätzlichen speziellen Modulen ausgerüstet werden muss.

Neben dem Verfahren zur gesicherten Übermittlung von elektronischen Nachrichten über ein Telekommunikationsnetz betrifft die vorliegende Erfindung auch ein geeignetes computerbasiertes Verschlüsselungssystem für die gesicherte Übermittlung von elektronischen Nachrichten über ein Telekommunikationsnetz und ein Computerprogrammprodukt mit geeigneten Computerprogrammcodemitteln zur Steuerung eines oder mehrerer Prozessoren eines Computers für die gesicherte Übermittlung von elektronischen Nachrichten über ein Telekommunikationsnetz.

### Kurze Beschreibung der Zeichnungen

Nachfolgend wird eine Ausführung der vorliegenden Erfindung anhand eines Beispieles beschrieben. Das Beispiel der Ausführung wird durch die folgenden beigelegten Figuren illustriert:
Figur 1 zeigt ein Blockdiagramm, welches schematisch den Ablauf beim aus dem Stand der Technik bekannten Public-Key-Verfahren für die gesicherte Übermittlung von elektronischen Nachrichten über ein Telekommunikationsnetz illustriert.
Figur 2 zeigt ein Blockdiagramm, welches schematisch den Ablauf bei den aus dem Stand der Technik bekannten Kurierdienst-Systemen für die gesicherte Übermittlung von elektronischen Nachrichten über ein Telekommunikationsnetz illustriert.
Figur 3 zeigt ein Blockdiagramm, welches schematisch den Ablauf zwischen dem computerbasierten Verschlüsselungssystem und einer Empfangsvorrichtung bei einem Beispiel der erfindungsgemässen gesicherten Übermittlung von elektronischen Nachrichten über ein Telekommunikationsnetz illustriert.
Figur 4 zeigt ein Flussdiagramm, welches schematisch den Verfahrensablauf bei einem Beispiel der erfindungsgemässen gesicherten Übermittlung von elektronischen Nachrichten über ein Telekommunikationsnetz illustriert.

### Wege zur Ausführung der Erfindung

In der Figur 3 wird schematisch ein Verschlüsselungssystem 32 illustriert, das einen oder mehrere Computer mit jeweils einem oder mehreren Prozessoren umfasst. Das Verschlüsselungssystem 32 umfasst mehrere funktionale Module, die vorzugsweise als programmierte Softwaremodule ausgeführt sind und die den (die) Prozessor(en) des Verschlüsselungssystems so steuern, dass die Funktion des betreffenden funktionalen Moduls durch den (die) Prozessor(en) ausgeführt wird. Die programmierten Softwaremodule umfassen jeweils Computerprogrammcodemittel, die auf einem computerlesbaren Medium 322 gespeichert sind. Der Fachmann wird verstehen, dass die funktionalen Module auch teilweise oder vollständig hardwaremässig ausgeführt werden können.

Das Verschlüsselungssystem 32 umfasst ein Kommunikationsmodul 321 für den Austausch von elektronischen Nachrichten, wie E-Mails, über ein Telekommunikationsnetz 35, beispielsweise das Internet und/oder ein Mobilfunknetz, mit der in Figur 3 dargestellten Empfangsvorrichtung 34.

Wie in der Figur 3 schematisch angedeutet wird, wird im Schritt S1 von einer Sendervorrichtung 31 ein E-Mail 311 dem Verschlüsselungssystem 32 übergeben. Das E-Mail 311 kann auch in einem Computer des Verschlüsselungssystems 32 generiert werden. Anstatt das E-Mail 311 wie in den bekannten Kurierdienst-Systemen zu speichern und einen Hyper-Link auf dieses E-Mail in ein zweites neues HTML-E-Mail zu integrieren, verschlüsselt das Verschlüsselungssystem 32, respektive das betreffende funktionale Modul, das E-Mail 311 und integriert das verschlüsselte E-Mail 331 in ein HTML- E-Mail 33, wie in der Figur 3 schematisch illustriert wird. Das heisst, nicht ein Link auf das E-Mail 311, sondern das ganze verschlüsselte E-Mail 331 wird in ein HTML-E-Mail 33 eingefügt. Das HTML-E-Mail 33 wird vom Verschlüsselungssystem 32 als E-Mail bereitgestellt, dessen Inhalt das Format der Textauszeichnungssprache HTML aufweist. Der Inhalt des E-Mails 33 wird insbesondere als HTML-Seite eingerichtet, die normalerweise als Rückmeldeformular, ein so genanntes Feedback-Formular, in Webseiten dient (z.B. <form action=https://www.servername.com/xxx.cgi" method=POST>). Das verschlüsselte E-Mail 331 wird vom Verschlüsselungssystem 32 versteckt in eines oder mehrere Formularfelder des HTML-Inhalts des E-Mails 33 eingefügt (z.B. <input type="HIDDEN" name="field1" value=".....">). Falls das E-Mail 311 Anhänge, so genannte Attachments, aufweist, werden diese jeweils separat in verschiedene Formularfelder des HTML-Inhalts des E-Mails 33 eingefügt. Der HTML-Inhalt des E-Mails 33 wird zudem mit einem Formularfeld als Eingabefeld für die Eingabe eines Passworts oder Zugriffscodes durch den Benutzer versehen (z.B. Passwort: <input type="PASSWORD" name="password">). Überdies werden Adressinformationen des Verschlüsselungssystems 32 in den HTML-Inhalt des E-Mails 33 eingefügt (z.B. https://www.servername.com/xxx.cgi). Schliesslich wird ein durch Benutzer betätigbares Aktivierungselement in den HTML-Inhalt des E-Mails 33 eingefügt (z.B. <input type="SUBMIT" value="Zum Entschlüsseln hier klicken">).

Das bereitgestellte HTML-E-Mail 33 wird dann vom Verschlüsselungssystem 32 im Schritt S9 über das Telekommunikationsnetz 35 zur Empfangsvorrichtung 34 übermittelt, wo es, wie gewöhnlich, auf herkömmliche Weise in respektive durch dessen Mail-Programm gespeichert wird. Wenn der Empfänger, das heisst der Benutzer der Empfangsvorrichtung 34, den Inhalt dieses E-Mails nun lesen will, gibt er sein Passwort in das dazu vorgesehene Formularfeld ein und betätigt das Aktivierungselement, das heisst, er klickt auf den Button im HTML-E-Mail 33. Als Antwort auf die Betätigung des Aktivierungselements erstellt das E-Mail-Programm der Empfangsvorrichtung 34 auf herkömmliche Weise entsprechend der HTML-Anweisung im HTML-Inhalt des E-Mails 33 (action=https) im Schritt S11 eine gesicherte Verbindung, in unserem Beispiel eine SSL-Verbindung, zum Verschlüsselungssystem 32, das durch die oben erwähnten Adressinformationen bestimmt ist, und lädt das eingegebene Passwort und das versteckt in den Formularfeldern verschlüsselte E-Mail 331 zum Verschlüsselungssystem 32. Bei korrektem Passwort entschlüsselt das Verschlüsselungssystem 32 das über die gesicherte Verbindung empfangene verschlüsselte E-Mail 331 und übermittelt im Schritt S14 das entschlüsselte E-Mail 311 über die gesicherte Verbindung zur Darstellung in einem Browserfenster der Empfangsvorrichtung 34 oder, je nach Dateityp, des Anhangs in einem dafür vorgesehenen Darstellungsprogramm der Empfangsvorrichtung 34. Der Benutzer der Empfangsvorrichtung 34 realisiert nur, dass er auf den Button klickt und dass das E-Mail 311 lesbar im BrowserFenster, respektive im Darstellungsprogramm, erscheint.

Das E-Mail 311 wird also versteckt in ein anderes E-Mail 33 gepackt und zwar so, dass beim Klicken auf den HTML-Button im E-Mail 33, das verschlüsselte E-Mail 331 automatisch zum Verschlüsselungssystem 32 hochgeladen, dort entschlüsselt und in einem Browserfenster der Empfangsvorrichtung 34 dargestellt wird.

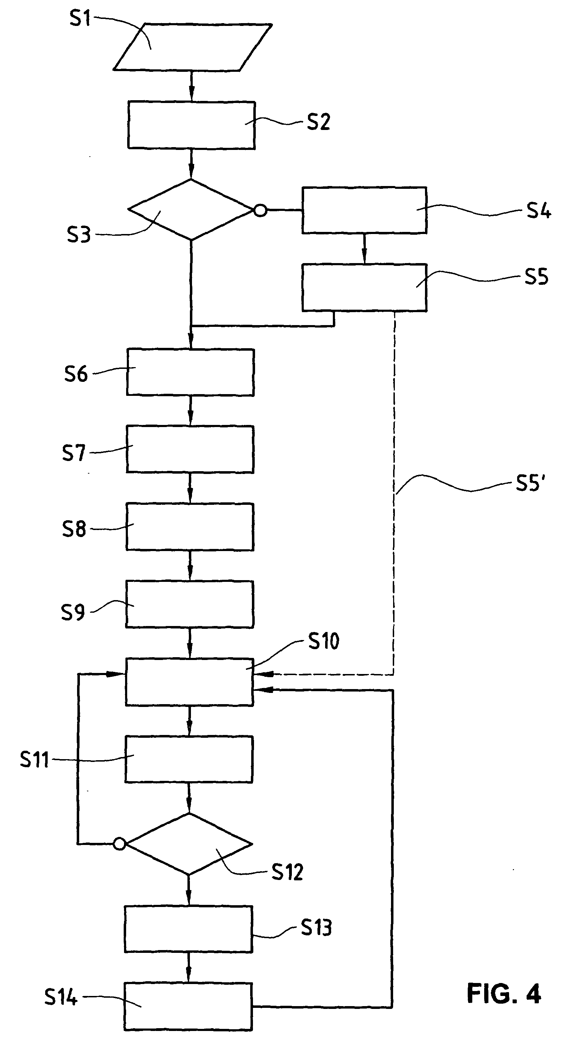

Wie im Flussdiagramm der Figur 4 schematisch dargestellt ist, wird der Verfahrensablauf im Schritt S1 durch die Übermittlung eines E-Mails 311 von einer Sendervorrichtung 31 an das Verschlüsselungssystem 32 eingeleitet.

Im Schritt S2 wird das E-Mail 311 vom Verschlüsselungssystem 32 entgegengenommen.

Im Schritt S3 untersucht das Verschlüsselungssystem 32, ob für den Empfänger (Adressat) des E-Mails 311 bereits ein Schlüssel für das Verschlüsselungsverfahren bereitgestellt wurde.

Falls für den Empfänger noch kein Schlüssel bereitgestellt wurde, wird im Schritt S4 ein Schlüssel generiert und dem betreffenden Empfänger zugeordnet im Verschlüsselungssystem 32 gespeichert.

Im Schritt S5 wird dem Empfänger ein Passwort oder Zugriffscode übermittelt, beispielsweise per Telefon, was in der Figur 4 durch den Pfeil S5' angedeutet wird.

Im Schritt S6 stellt das Verschlüsselungssystem 32 gegebenenfalls die einzelnen Teile des E-Mails 311 bereit, indem sie Anhänge (Attachments) vom E-Mail 311 separiert.

Im Schritt S7 verschlüsselt das Verschlüsselungssystem 32 das E-Mail 311, das heisst, die einzelnen Teile des E-Mails 311 einschliesslich des Inhalts des E-Mails 311 und der im Schritt S6 separierten Anhänge (Attachments) des E-Mails 311 werden verschlüsselt.

Im Schritt S8 fügt das Verschlüsselungssystem 32 das verschlüsselte E-Mail 331 versteckt in HTML-Formularfelder der oben beschriebenen HTML-E-Mail 33 ein, dabei werden die im Schritt S7 verschlüsselten Teile des E-Mails 311 jeweils in separate HTML-Formularfelder eingefügt. Wie oben beschrieben, fügt das Verschlüsselungssystem 32 zudem das Formularfeld als Eingabefeld für die Eingabe des Passworts oder des Zugriffscodes, die Adressinformationen des Verschlüsselungssystems 32 und das durch den Empfänger betätigbare Aktivierungselement in den HTML-Inhalt des E-Mails 33 ein.

Im Schritt S9 übermittelt das Verschlüsselungssystem 32 das im Schritt S8 bereitgestellte HTML-E-Mail 33 mit dem verschlüsselten E-Mail 331 über das Telekommunikationsnetz 35 an die Empfangsvorrichtung 34, wo es im Mail-Programm gespeichert wird.

Im Schritt S10 öffnet der Empfänger im Mail-Programm der Empfangsvorrichtung 34 das HTML-E-Mail 33, gibt das im Schritt S5 übermittelte Passwort in das als Eingabefeld vorgesehene Formularfeld ein und betätigt das Aktivierungselement des HTML-E-Mails 33.

Im Schritt S11 erstellt das Mail-Programm der Empfangsvorrichtung 34 die gesicherte Verbindung zum Verschlüsselungssystem 32 und übermittelt das eingegebene Passwort und das versteckt in den Formularfeldern verschlüsselte E-Mail 331 zum Verschlüsselungssystem 32. Das HTML-E-Mail 33 mit dem verschlüsselten E-Mail 331 bleibt dabei zur späteren erneuten Verwendung in der Empfangsvorrichtung 34 gespeichert.

Im Schritt S12 überprüft das Verschlüsselungssystem 32, ob das empfangene Passwort korrekt ist, das heisst, das empfangene Passwort wird mit einem Passwort verglichen, das dem Benutzer zugeordnet ist, an den die E-Mail 311 respektive das HTML-E-Mail 33 adressiert ist. Bei inkorrektem Passwort übermittelt das Verschlüsselungssystem 32 eine Fehlermeldung an das Mail-Programm der Empfangsvorrichtung 34.

Bei korrektem Passwort entschlüsselt das Verschlüsselungssystem 32 im Schritt S13 das empfangene verschlüsselte E-Mail 331, das heisst, die im Schritt S8 in das HTML-E-Mail 33 eingefügten verschlüsselten Teile des E-Mails 311.

Im Schritt S14 zeigt das Verschlüsselungssystem 32 die entschlüsselte E-Mail 331, das heisst, die unverschlüsselten Teile des E-Mails 311, über die im Schritt S11 erstellte gesicherte Verbindung in einem Browserfenster der Empfangsvorrichtung 34 und/oder, je nach Dateityp des Anhangs, in einem dafür vorgesehenen Darstellungsprogramm der Empfangsvorrichtung 34 an. Das heisst, das Verschlüsselungssystem 32 übermittelt die entschlüsselte E-Mail 331, respektive die unverschlüsselten Teile des E-Mails 311, zur Darstellung in einem Browserfenster und/oder in einem Darstellungsprogramm über die gesicherte Verbindung an die Empfangsvorrichtung 34.

An dieser Stelle soll festgehalten werden, dass die Eingabe des Passworts, respektive Zutrittscodes, in einer Ausführungsvariante auch erst durch das Verschlüsselungssystem 32 vom Benutzer verlangt werden kann. Zudem kann die Aktivierung der Übermittlung der verschlüsselten E-Mail 331 von der Empfangsvorrichtung 34 zum Verschlüsselungssystem 32 in einer Ausführungsvariante auch unabhängig von der Betätigung eines Aktivierungselements, beispielsweise automatisch durch Programmcode im HTML-E-Mail 33, ausgelöst werden, beispielsweise durch Javascript. Weiter kann die Übermittlung der verschlüsselten E-Mail 331 von der Empfangsvorrichtung 34 zum Verschlüsselungssystem 32 in einer Ausführungsvariante auch ungesichert über das Telekommunikationsnetz 35 erfolgen, beispielsweise ausgelöst durch den erwähnten Programmcode. Im letzten Fall wird die gesicherte Verbindung erst vom Verschlüsselungssystem 32 für die Übermittlung des entschlüsselten E-Mails 311 an die Empfangsvorrichtung 34 erstellt. Schliesslich ist es auch möglich, dass die Schritte S2 bis S9 in einem ersten Computer des Verschlüsselungssystems 32 ausgeführt werden, dass der im Schritt S4 generierte Schlüssel vom ersten Computer an einen zweiten Computer des Verschlüsselungssystems 32 übermittelt wird, dass das Mail-Programm der Empfangsvorrichtung 34 im Schritt S11 die gesicherte Verbindung zum zweiten Computer des Verschlüsselungssystems 32 erstellt und das eingegebene Passwort und das verschlüsselte E-Mail 331 zum zweiten Computer des Verschlüsselungssystems 32 übermittelt, und dass die Schritte S12 bis S14 vom zweiten Computer des Verschlüsselungssystems 32 ausgeführt werden.

Obwohl technisch komplett anders gelöst, wirkt die vorgeschlagene Lösung für den Empfänger ähnlich wie das Kurierdienst-System. Er muss einfach auf einen Button klicken, anstatt auf einen Link, um das E-Mail zu lesen. Die vorgeschlagene Lösung ergibt jedoch bedeutende Vorteile gegenüber Kurierdienst-Systemen. Der Benutzer der Empfangsvorrichtung 34 (Empfänger) kann das E-Mail mit seinem Mail-Programm verwalten. Das E-Mail 311 ist zwar verschlüsselt und eingebettet im HTML-E-Mail 33 abgelegt, aber dennoch eine normale E-Mail mit Inhalt. Somit kann der Empfänger das HTML-E-Mail 33 mit seinem gesamten Inhalt kopieren, verschieben, auf einem Backup sichern, löschen usw. Er kann das E-Mail 33 also in seiner gewohnten Umgebung verwalten. Zudem muss der Sender, respektive das Verschlüsselungssystem 32, nicht alle E-Mails zwischenspeichern, die an die Kommunikationspartner übermittelt wurden. Pro Kommunikationspartner muss nur ein Schlüssel und das Passwort auf dem Verschlüsselungssystem 32 gespeichert und verwaltet werden, unabhängig davon, wie viele E-Mails an diesen Partner geschickt werden. Somit stellt sich auch nicht die Problematik, die E-Mails nach einer gewissen Zeit zu löschen. Der Kommunikationspartner kann seine E-Mails lesen, bis der Sender, respektive das Verschlüsselungssystem 32, den Schlüssel löscht. Schliesslich bietet das vorgeschlagene Verfahren auch eine höhere Sicherheit als ein Kurierdienst-System. Beim Kurierdienst-System können nämlich unter Zuhilfenahme des Passworts sämtliche verschlüsselten E-Mails eines bestimmten Senders gelesen werden, wohingegen bei der vorgeschlagenen Lösung ein Benutzer neben der Kenntnis des Passworts auch im Besitz der verschlüsselten E-Mail sein muss, um diese zu lesen.

Gegenüber dem Public-Key-Verfahren weist die vorgeschlagene Lösung den Vorteil auf, dass der Kommunikationspartner keine Software, kein Plugin, kein Zertifikat oder Schlüssel bei sich im System installieren muss und dennoch die Möglichkeit besitzt verschlüsselte E-Mails zu lesen. Die vorgeschlagene Lösung weist gegenüber Public-Key-Verfahren zudem den Vorteil auf, dass dem Absender automatisch eine Empfangsbestätigung übermittelt werden kann.

## Patentansprüche

1. Verfahren zur gesicherten Übermittlung von elektronischen Nachrichten über ein Telekommunikationsnetz (35), umfassend:
Verschlüsseln (S7) einer ersten elektronischen Nachricht (311) in einem Verschlüsselungssystem (32),
Bereitstellen (S8) einer zweiten elektronischen Nachricht (33) im Verschlüsselungssystem (32), wobei die zweite elektronische Nachricht (33) einen Inhalt im Format einer Textauszeichnungssprache umfasst und wobei die verschlüsselte erste elektronische Nachricht (331) in den genannten Inhalt eingefügt wird,
Übermitteln (S9) der zweiten elektronischen Nachricht (33) über das Telekommunikationsnetz (35) an eine Empfangsvorrichtung (34),
Übermitteln (S11) der verschlüsselten ersten elektronischen Nachricht (331) von der Empfangsvorrichtung (34) über das Telekommunikationsnetz (35) an das Verschlüsselungssystem (32),
Entschlüsseln (S13) der über das Telekommunikationsnetz (35) empfangenen verschlüsselten ersten elektronischen Nachricht (331) im Verschlüsselungssystem (32), und
Übermitteln (S14) der entschlüsselten ersten elektronischen Nachricht (311) vom Verschlüsselungssystem (32) über eine gesicherte Verbindung über das Telekommunikationsnetz (35) zur Darstellung in der Empfangsvorrichtung (34).

2. Verfahren nach Anspruch 1, **dadurch gekennzeichnet, dass** nach dem Empfang der zweiten elektronischen Nachricht (33) in der Empfangsvorrichtung (34) ein durch Benutzer betätigbares Aktivierungselement im Inhalt der zweiten elektronischen Nachricht (33) betätigt (S10) wird, und dass die verschlüsselte erste elektronische Nachricht (331) von der Empfangsvorrichtung (34) als Antwort auf die Betätigung (S 10) des Aktivierungselements über die gesicherte Verbindung über das Telekommunikationsnetz (35) an das Verschlüsselungssystem (32) übermittelt (S11) wird.

3. Verfahren nach einem der Ansprüche 1 oder 2, **dadurch gekennzeichnet, dass** der Inhalt der zweiten elektronischen Nachricht (33) als Rückmeldeformular mit Formularfeldern eingerichtet wird, dass die verschlüsselte erste elektronische Nachricht (331) versteckt in Formularfelder des Rückmeldeformulars eingefügt wird, und dass die Übermittlung (S11) der verschlüsselten ersten elektronischen Nachricht (331) an das Verschlüsselungssystem (32) durch die Übermittlung der Inhalte der Formularfelder von der Empfangsvorrichtung (34) an das Verschlüsselungssystem (32) erfolgt.

4. Verfahren nach einem der Ansprüche 1 bis 3, **dadurch gekennzeichnet, dass** beim Bereitstellen (S8) der zweiten elektronischen Nachricht (33) ein Formularfeld als Eingabefeld für die Eingabe eines Passworts oder eines Zugriffscodes in den Inhalt der zweiten elektronischen Nachricht (33) eingefügt wird, dass nach dem Empfang der zweiten elektronischen Nachricht (33) in der Empfangsvorrichtung (34) ein Passwort oder ein Zugriffscode durch einen Benutzer der Empfangsvorrichtung (34) in das Eingabefeld eingegeben (S10) wird, dass das eingegebene Passwort oder der eingegebene Zugriffscode zusammen mit der verschlüsselten ersten elektronischen Nachricht (331) an das Verschlüsselungssystem (32) übermittelt (S11) wird, dass das eingegebene Passwort oder der eingegebene Zugriffscode durch das Verschlüsselungssystem (32) mit einem Passwort oder einem Zugriffscode verglichen (S12) wird, das oder der dem Benutzer zugeordnet ist, an den die erste elektronische Nachricht (311) adressiert ist, und dass bei fehlender Übereinstimmung die Entschlüsselung (S13) der verschlüsselten ersten elektronischen Nachricht (331) unterlassen wird.

5. Verfahren nach einem der Ansprüche 1 bis 4, **dadurch gekennzeichnet, dass** Electronic-Mails als elektronische Nachrichten (311, 33) verwendet werden, dass die Hypertext-Markup-Language oder die Extensible-Markup-Language als Textauszeichnungssprache verwendet wird, dass die verschlüsselte erste elektronische Nachricht (331) versteckt in Formularfelder des Inhalts der zweiten elektronischen Nachricht (33) eingefügt wird, wobei vorhandene Anhänge der ersten elektronischen Nachricht (311) jeweils verschlüsselt in separate Formularfelder eingefügt werden, und dass beim Bereitstellen (S8) der zweiten elektronischen Nachricht (33) Adressinformationen des Verschlüsselungssystems (32) in den Inhalt der zweiten elektronischen Nachricht (33) eingefügt werden.

6. Computerbasiertes Verschlüsselungssystem (32) für die gesicherte Übermittlung von elektronischen Nachrichten über ein Telekommunikationsnetz (35), umfassend:
Mittel zum Verschlüsseln einer ersten elektronischen Nachricht (311), und
Mittel zum Entschlüsseln der verschlüsselten ersten elektronischen Nachricht (331),
Mittel zum Bereitstellen einer zweiten elektronischen Nachricht (33), wobei die zweite elektronische Nachricht (33) einen Inhalt im Format einer Textauszeichnungssprache umfasst und wobei die verschlüsselte erste elektronische Nachricht (331) in den genannten Inhalt eingefügt wird,
Mittel zum Übermitteln der zweiten elektronischen Nachricht (33) über das Telekommunikationsnetz (35) an eine Empfangsvorrichtung (34),
Mittel zum Empfangen der verschlüsselten ersten elektronischen Nachricht (331) von der Empfangsvorrichtung (34) über das Telekommunikationsnetz (35) und zum Entschlüsseln der empfangenen verschlüsselten ersten elektronischen Nachricht (331), und
Mittel zum Übermitteln der entschlüsselten ersten elektronischen Nachricht (311) über eine gesicherte Verbindung über das Telekommunikationsnetz (35) zur Darstellung in der Empfangsvorrichtung (34).

7. Computerbasiertes Verschlüsselungssystem (32) nach Anspruch 6, **dadurch gekennzeichnet, dass** die Mittel zum Bereitstellen der zweiten elektronischen Nachricht (33) eingerichtet sind, ein durch Benutzer betätigbares Aktivierungselement in den Inhalt der zweiten elektronischen Nachricht (33) einzufügen und den Inhalt der zweiten elektronischen Nachricht (33) so zu gestalten, dass die verschlüsselte erste elektronische Nachricht (331) von der Empfangsvorrichtung (34) als Antwort auf eine Betätigung des Aktivierungselements in der gesicherten Verbindung über das Telekommunikationsnetz (35) an das Verschlüsselungssystem (32) übermittelt wird.

8. Computerbasiertes Verschlüsselungssystem (32) nach einem der Ansprüche 6 oder 7, **dadurch gekennzeichnet, dass** die Mittel zum Bereitstellen der zweiten elektronischen Nachricht (33) eingerichtet sind, den Inhalt der zweiten elektronischen Nachricht (33) als Rückmeldeformular mit Formularfeldern einzurichten und die verschlüsselte erste elektronische Nachricht (331) versteckt in Formularfelder des Rückmeldeformulars einzufügen.

9. Computerprogrammprodukt umfassend: ein computerlesbares Medium (322) mit darin enthaltenen Computerprogrammcodemitteln zur Steuerung eines oder mehrerer Prozessoren eines Computers für die gesicherte Übermittlung von elektronischen Nachrichten über ein Telekommunikationsnetz (35), derart,
dass im Computer eine erste elektronische Nachricht (311) verschlüsselt (S7) wird,
dass im Computer eine zweite elektronische Nachricht (33) bereitgestellt (S8) wird, wobei die zweite elektronische Nachricht (33) einen Inhalt im Format einer Textauszeichnungssprache umfasst und wobei die verschlüsselte erste elektronische Nachricht (331) in den genannten Inhalt eingefügt wird,
dass die zweite elektronische Nachricht (33) vom Computer über das Telekommunikationsnetz (35) an eine Empfangsvorrichtung (34) übermittelt (S9) wird,
dass die verschlüsselte erste elektronische Nachricht (331) im Computer über das Telekommunikationsnetz (35) von der Empfangsvorrichtung (34) empfangen wird und im Computer entschlüsselt (S13) wird, und
dass die entschlüsselte erste elektronische Nachricht (311) vom Computer über eine gesicherte Verbindung über das Telekommunikationsnetz (35) zur Darstellung an die Empfangsvorrichtung (34) übermittelt (S14) wird.

10. Computerprogrammprodukt nach Anspruch 9, **dadurch gekennzeichnet, dass** es weitere Computerprogrammcodemittel umfasst, die die Prozessoren des Computers derart steuern, dass im Computer beim Bereitstellen (S8) der zweiten elektronischen Nachricht (33) ein durch Benutzer betätigbares Aktivierungselement in den Inhalt der zweiten elektronischen Nachricht (33) eingefügt wird, und dass der Inhalt der zweiten elektronischen Nachricht (33) so gestaltet wird, dass die verschlüsselte erste elektronische Nachricht (331) von der Empfangsvorrichtung (34) als Antwort auf eine Betätigung (S10) des Aktivierungselements in der gesicherten Verbindung über das Telekommunikationsnetz (35) an den Computer übermittelt (S11) wird.

11. Computerprogrammprodukt (322) nach einem der Ansprüche 9 oder 10, **dadurch gekennzeichnet, dass** es weitere Computerprogrammcodemittel umfasst, die die Prozessoren des Computers derart steuern, dass im Computer beim Bereitstellen (S8) der zweiten elektronischen Nachricht (33) der Inhalt der zweiten elektronischen Nachricht (33) als Rückmeldeformular mit Formularfeldern eingerichtet wird und dass die verschlüsselte erste elektronische Nachricht (331) versteckt in Formularfelder des Rückmeldeformulars einfügt wird.

## Claims

1. A method for the secure transmission of electronic messages via a telecommunication network (35), comprising:
encryption (S7) of a first electronic message (311) in an encryption system (32),
provision (S8) of a second electronic message (33) in the encryption system (32), where the second electronic message (33) comprises a content in the format of a text markup language and where the encrypted first electronic message (331) is added to said content,
transmission (S9) of the second electronic message (33) to a reception apparatus (34) via the telecommunication network (35),
transmission (S11) of the encrypted first electronic message (331) from the reception apparatus (34) to the encryption system (32) via the telecommunication network (35),
decryption (S13) of the encrypted first electronic message (331) received via the telecommunication network (35) in the encryption system (32), and
transmission (S14) of the decrypted first electronic message (311) from the encryption system (32) using a secure connection via the telecommunication network (35) for the purpose of display in the reception apparatus (34).

2. The method as claimed in claim 1, **characterized in that** receipt of the second electronic message (33) in the reception apparatus (34) is followed by operation (S10) of an activation element, which can be operated by the user, in the content of the second electronic message (33), and **in that**, in response to operation (S10) of the activation element the encrypted first electronic message (331) is transmitted (S11), from the reception apparatus (34) to the encryption system (32) using the secure connection via the telecommunication network (35).

3. The method as claimed in either of claims 1 or 2, **characterized in that** the content of the second electronic message (33) is set up as a feedback form with form fields, **in that** the encrypted first electronic message (331) is added secretly to form fields in the feedback form, and **in that** the encrypted first electronic message (331) is transmitted (S11) to the encryption system (32) by transmitting the contents of the form fields from the reception apparatus (34) to the encryption system (32).

4. The method as claimed in one of claims 1 to 3, **characterized in that** provision (S8) of the second electronic message (33) involves a form field being added to the content of the second electronic message (33) as an input field for inputting a password or an access code, **in that** receipt of the second electronic message (33) in the reception apparatus (34) is followed by the input (S10) of a password or an access code into the input field by a user of the reception apparatus (34), **in that** the password which has been input or the access code which has been input is transmitted (S11) to the encryption system (32) together with the encrypted first electronic message (331), **in that** the password which has been input or the access code which has been input is compared (S12) by the encryption system (32) with a password or an access code which is associated with the user to whom the first electronic message (311) is addressed, and **in that** the encrypted first electronic message (331) is not decrypted (S13) if there is no match.

5. The method as claimed in one of claims 1 to 4, **characterized in that** electronic mails are used as electronic messages (311, 33), **in that** Hypertext Markup Language or Extensible Markup Language is used as the text markup language, **in that** the encrypted first electronic message (331) is added secretly to form fields in the content of the second electronic message (33), with any attachments to the first electronic message (311) being added, in each case in encrypted form, to separate form fields, and **in that** provision (S8) of the second electronic message (33) involves address information for the encryption system (32) being added to the content of the second electronic message (33).

6. A computer-based encryption system (32) for the secure transmission of electronic messages via a telecommunication network (35), comprising:
means for encrypting a first electronic message (311), and
means for decrypting the encrypted first electronic message (331),
means for providing a second electronic message (33), where the second electronic message (33) comprises a content in the format of a text markup language and
where the encrypted first electronic message (331) is added to said content,
means for transmitting the second electronic message (33) to a reception apparatus (34) via the telecommunication network (35),
means for receiving the encrypted first electronic message (331) from the reception apparatus (34) via the telecommunication network (35) and for decrypting the encrypted first electronic message (331) received, and
means for transmitting the decrypted first electronic message (311) using a secure connection via the telecommunication network (35) for the purpose of display in the reception apparatus (34).

7. The computer-based encryption system (32) as claimed in claim 6, **characterized in that** the means for providing the second electronic message (33) are set up to add an activation element which can be operated by the user to the content of the second electronic message (33) and to fashion the content of the second electronic message (33) such that, in response to operation of the activation element, the encrypted first electronic message (331) is transmitted from the reception apparatus (34) to the encryption system (32) using the secure connection via the telecommunication network (35).

8. The computer-based encryption system (32) as claimed in either of claims 6 or 7, **characterized in that** the means for providing the second electronic message (33) are set up to set up the content of the second electronic message (33) as a feedback form with form fields and to add the encrypted first electronic message (331) secretly to form fields in the feedback form.

9. A computer program product comprising: a computer-readable medium (322) containing computer program code means for controlling one or more processors in a computer for the secure transmission of electronic messages via a telecommunication network (35), such that a first electronic message (311) is encrypted (S7) in the computer,
that a second electronic message (33) is provided (S8) in the computer, where the second electronic message (33) comprises a content in the format of a text markup language and where the encrypted first electronic message (331) is added to said content,
that the second electronic message (33) is transmitted (S9) from the computer to a reception apparatus (34) via the telecommunication network (35),
that the encrypted first electronic message (331) is received in the computer from the reception apparatus (34) via the telecommunication network (35) and is decrypted (S13) in the computer, and
that the decrypted first electronic message (311) is transmitted (S14) from the computer to the reception apparatus (34) using a secure connection via the telecommunication network (35) for the purpose of display.

10. The computer program product as claimed in claim 9, **characterized in that** it comprises further computer program code means which control the processors in the computer such that provision (S8) of the second electronic message (33) in the computer involves an activation element which can be operated by the user being added to the content of the second electronic message (33), and **in that** the content of the second electronic message (33) is fashioned such that, in response to operation (S10) of the activation element, the encrypted first electronic message (331) is transmitted (S11) from the reception apparatus (34) to the computer using the secure connection via the telecommunication network (35).

11. The computer program product (322) as claimed in either of claims 9 or 10, **characterized in that** it comprises further computer program code means which control the processors in the computer such that provision (S8) of the second electronic message (33) in the computer involves the content of the second electronic message (33) being set up as a feedback form with form fields and that the encrypted first electronic message (331) is added secretly to form fields in the feedback form.

## Revendications

1. Procédé de transmission sécurisée de courriers électroniques par le biais d'un réseau de télécommunication (35) comprenant :
Cryptage (S7) d'un premier courrier électronique (311) dans un système de cryptage (32),
Mise à disposition (S8) d'un deuxième courrier électronique (33) dans le système de cryptage (32), le deuxième courrier électronique (33) comprenant un contenu au format d'un langage de balisage de texte et le premier courrier électronique crypté (331) étant inséré dans ledit contenu,
Transmission (S9) du deuxième courrier électronique (33) par le biais du réseau de télécommunication (35) à un dispositif de réception (34),
Transmission (S11) du premier courrier électronique crypté (331) par le dispositif de réception (34) par le biais du réseau de télécommunication (35) au système de cryptage (32),
Décryptage (S13) du premier courrier électronique crypté (331) reçu par le biais du réseau de télécommunication (35) dans le système de cryptage (32), et
Transmission (S14) du premier courrier électronique décrypté (311) par le système de cryptage (32) sur une liaison sécurisée par le biais du réseau de télécommunication (35) en vue de sa représentation dans le dispositif de réception (34).

2. Procédé selon la revendication 1, **caractérisé en ce qu'**après la réception du deuxième courrier électronique (33) dans le dispositif de réception (34), un élément d'activation actionnable par l'utilisateur est actionné (S10) dans le contenu du deuxième courrier électronique (33) et que le premier courrier électronique crypté (331) est transmis (S11) au système de cryptage (32) par le dispositif de réception (34) en réponse à l'actionnement (S10) de l'élément d'activation sur la liaison sécurisée par le biais du réseau de télécommunication (35).

3. Procédé selon l'une des revendications 1 ou 2, **caractérisé en ce que** le contenu du deuxième courrier électronique (33) est configuré sous la forme d'un formulaire de confirmation avec des champs de formulaire, que le premier courrier électronique crypté (331) est inséré masqué dans les champs de formulaire du formulaire de confirmation et que la transmission (S11) du premier courrier électronique crypté (331) au système de cryptage (32) s'effectue en transmettent le contenu des champs du formulaire du dispositif de réception (34) au système de cryptage (32).

4. Procédé selon l'une des revendications 1 à 3, **caractérisé en ce que** lors de la mise à disposition (S8) du deuxième courrier électronique (33), un champ de formulaire est inséré dans le contenu du deuxième courrier électronique (33) sous la forme d'un champ de saisie pour la saisie d'un mot de passe ou d'un code d'accès, qu'après la réception du deuxième courrier électronique (33) dans le dispositif de réception (34) un mot de passe ou un code d'accès est saisi (S10) dans le champ de saisie par un utilisateur du dispositif de réception (34), que le mot de passe saisi ou le code d'accès saisi est transmis (S11) au système de cryptage (32) conjointement avec le premier courrier électronique crypté (331), que le mot de passe saisi ou le code d'accès saisi est comparé (S12) par le système de cryptage (32) avec un mot de passe ou un code d'accès qui est affecté à l'utilisateur auquel est adressé le premier courrier électronique (331) et qu'en l'absence de concordance, le décryptage (S13) du premier courrier électronique crypté (331) n'a pas lieu.

5. Procédé selon l'une des revendications 1 à 4, **caractérisé en ce que** des courriels sont utilisés comme courriers électroniques (331, 33), que le langage HTML (Hypertext-Markup-Language) ou XML (Extensible-Markup-Language) est utilisé comme langage de balisage de texte, que le premier courrier électronique crypté (331) est inséré masqué dans les champs de formulaire du contenu du deuxième courrier électronique (33), les pièces jointes présentes du premier courrier électronique (331) étant respectivement insérées cryptées dans des champs de formulaire séparés et que lors de la mise à disposition (S8) du deuxième courrier électronique (33) des informations d'adresse du système de cryptage (32) sont insérées dans le contenu du deuxième courrier électronique (33).

6. Système de cryptage informatisé (32) pour la transmission sécurisée de courriers électroniques par le biais d'un réseau de télécommunication (35) comprenant :
Des moyens pour crypter un premier courrier électronique (311),
Des moyens pour décrypter le premier courrier électronique crypté (331),
Des moyens pour mettre à disposition un deuxième courrier électronique (33), le deuxième courrier électronique (33) comprenant un contenu au format d'un langage de balisage de texte et le premier courrier électronique crypté (331) étant inséré dans ledit contenu,
Des moyens pour transmettre le deuxième courrier électronique (33) par le biais du réseau de télécommunication (35) à un dispositif de réception (34),
Des moyens pour recevoir le premier courrier électronique crypté (331) par le dispositif de réception (34) par le biais du réseau de télécommunication (35) et pour décrypter le premier courrier électronique crypté (331) reçu, et
Des moyens pour transmettre le premier courrier électronique crypté (311) sur une liaison sécurisée par le biais du réseau de télécommunication (35) en vue de sa représentation dans le dispositif de réception (34).

7. Système de cryptage informatisé (32) selon la revendication 6, **caractérisé en ce que** les moyens de mise à disposition du deuxième courrier électronique (33) sont configurés pour insérer un élément d'activation actionnable par l'utilisateur dans le contenu du deuxième courrier électronique (33) et pour configurer le contenu du deuxième courrier électronique (33) de telle sorte que le premier courrier électronique crypté (331) est transmis au système de cryptage (32) par le dispositif de réception (34) en réponse à l'actionnement de l'élément d'activation sur la liaison sécurisée par le biais du réseau de télécommunication (35).

8. Système de cryptage informatisé (32) selon l'une des revendication 6 ou 7, **caractérisé en ce que** les moyens de mise à disposition du deuxième courrier électronique (33) sont configurés de manière à configurer le contenu du deuxième courrier électronique (33) sous la forme d'un formulaire de confirmation avec des champs de formulaire et à insérer le premier courrier électronique crypté (331) masqué dans les champs de formulaire du formulaire de confirmation.

9. Programme informatique comprenant : un support lisible sur ordinateur (322) contenant des moyens de code de programme informatique pour commander un ou plusieurs processeurs d'un ordinateur pour la transmission sécurisée de courriers électroniques par le biais d'un réseau de télécommunication (35) de telle sorte
qu'un premier courrier électronique (311) est crypté (S7) dans l'ordinateur,
qu'un deuxième courrier électronique (33) est mis à disposition (S8) dans l'ordinateur, le deuxième courrier électronique (33) comprenant un contenu au format d'un langage de balisage de texte et le premier courrier électronique crypté (331) étant inséré dans ledit contenu,
que le deuxième courrier électronique (33) est transmis (S9) par l'ordinateur par le biais du réseau de télécommunication (35) à un dispositif de réception (34),
que le premier courrier électronique crypté (331) est reçu dans l'ordinateur par le dispositif de réception (34) par le biais du réseau de télécommunication (35) et il est décrypté (S13) dans l'ordinateur, et
que le premier courrier électronique décrypté (311) est transmis (S14) par l'ordinateur sur une liaison sécurisée par le biais du réseau de télécommunication (35) en vue de sa représentation dans le dispositif de réception (34).

10. Programme informatique selon la revendication 9, **caractérisé en ce qu'**il comprend des moyens de code de programme informatique supplémentaires qui commandent les processeurs de l'ordinateur de telle sorte que dans l'ordinateur, lors de la mise à disposition (S8) du deuxième courrier électronique (33), un élément d'activation actionnable par l'utilisateur est inséré dans le contenu du deuxième courrier électronique (33) et que le contenu du deuxième courrier électronique (33) est configuré de telle sorte que le premier courrier électronique crypté (331) est transmis (S11) à l'ordinateur par le dispositif de réception (34) en réponse à l'actionnement (S10) de l'élément d'activation sur la liaison sécurisée par le biais du réseau de télécommunication (35).

11. Programme informatique (322) selon l'une des revendications 9 ou 10, **caractérisé en ce qu'**il comprend des moyens de code de programme informatique supplémentaires qui commandent les processeurs de l'ordinateur de telle sorte que dans l'ordinateur, lors de la mise à disposition (S8) du deuxième courrier électronique (33), le contenu du deuxième courrier électronique (33) est configuré sous la forme d'un formulaire de confirmation avec des champs de formulaire et que le premier courrier électronique crypté (331) est inséré masqué dans les champs de formulaire du formulaire de confirmation.
